# EUROPÄISCHE PATENTSCHRIFT

(11) **EP 0 374 438 B1**
(45) Veröffentlichungstag und Bekanntmachung des Hinweises auf die Patenterteilung: **24.03.1993**
(21) Anmeldenummer: 89120086.7
(22) Anmeldetag: 30.10.1989
(51) Int. Cl.: F16K 31/42

(54) **Vorgesteuertes Mehrwegeventil**
Pilot-operated directional valve
Distributeur piloté

(30) Priorität: 17.12.1988 DE 3842633
(43) Veröffentlichungstag der Anmeldung: 27.06.1990
(73) Patentinhaber: MANNESMANN REXROTH PNEUMATIK GMBH, 30453 Hannover (DE)
(72) Erfinder: Meyer, Ernst-August, D-3201 Algermissen 5 (DE)
(74) Vertreter: Flaig, Siegfried

(56) Entgegenhaltungen:
- EP-A- 0 204 666
- FR-A- 2 495 269
- GB-A- 900 738
- US-A- 2 480 712
- US-A- 3 270 776
- Katalog Steuerungstechnik, Gerät 572..., Ausgabe Oktober 1976, der Firma Wabco Westinghouse Steuerungstechnik GmbH & Co.

## Beschreibung

Die Erfindung betrifft ein vorgesteuertes Mehrwegeventil gemäß dem Oberbegriff des Patentanspruchs 1.

Ein Mehrwegeventil ist aus dem Katalog Steuerungstechnik, Gerät 572 ..., Ausgabe Oktober 1976, der Firma WABCO Westinghouse Steuerungstechnik GmbH & Co. bekannt.

Bei diesem mittels eines Vorsteuerventils steuerbaren Mehrwegeventil ist eine erste Druckmittelkammer mit einer zweiten Druckmittelkammer verbunden und eine dritte Druckmittelkammer gegen die zweite Druckmittelkammer abgesperrt, so lange das Vorsteuerventil nicht angesteuert wird.
Wird das Vorsteuerventil angesteuert, so nimmt es eine Schaltstellung ein, in welcher eine ständig mit der ersten Druckmittelkammer des Mehrwegeventils verbundene Eingangskammer des Vorsteuerventils mit einer Steuerkammer des Mehrwegeventils verbunden wird. Das Mehrwegeventil wird umgeschaltet, so daß die als Druckmitteleingangskammer dienende erste Druckmittelkammer gegen die als Druckmittelausgangskammer dienende zweite Druckmittelkammer abgesperrt und die zweite Druckmittelkammer mit der als Druckmittelauslaßkammer dienenden dritten Druckmittelkammer verbunden wird.

Im Ruhezustand des Vorsteuerventils und des Mehrwegeventils wird bei Versorgung der ersten Druckmittelkammer mit Druckmittel auch die zweite Druckmittelkammer und über diese ein Verbraucher mit Druckmittel beaufschlagt. Bei Ansteuerung des Vorsteuerventils wird das Mehrwegeventil umgeschaltet, die zweite Druckmittelkammer gegen die erste Druckmittelkammer abgesperrt und der Verbraucher über die zweite Druckmittelkammer sowie die dritte Druckmittelkammer zur Atmosphäre hin entlüftet.
Das Mehrwegeventil hat bei einer solchen Ausbildung und Schaltung die Funktion eines Entlüftungsventils.

Soll ein derartiges Mehrwegeventil als Belüftungsventil eingesetzt werden, d.h., daß in der Ruhestellung des Vorsteuerventils und des Mehrwegeventils die dritte Druckmittelkammer gegen die zweite Druckmittelkammer abgesperrt und die zweite Druckmittelkammer mit der ersten Druckmittelkammer verbunden ist, wobei in der dritten Druckmittelkammer Vorratsdruck ansteht und die erste Druckmittelkammer mit der Atmosphäre verbunden ist, und daß erst bei Anlegen einer Spannung an das Vorsteuerventil die dritte Druckmittelkammer mit der zweiten Druckmittelkammer verbunden und die zweite Druckmittelkammer gegen die erste Druckmittelkammer abgesperrt wird, so ist das Mehrwegventil in der Weise konstruktiv zu verändern, daß die dritte Druckmittelkammer ständig mit der Eingangskammer des Vorsteuerventils verbunden ist. Die erste Druckmittelkammer dagegen darf in diesem Fall keine Verbindung zur Eingangskammer des Vorsteuerventils haben.

Will man eine druckmittelbetätigbare Einrichtung oder auch Anlage so ausbilden, daß bei Ansteuerung des Vorsteuerventils wahlweise ein Belüften oder ein Entlüften dieser Einrichtung oder Anlage möglich ist, so ist es erforderlich, zwei vorgesteuerte Mehrwegeventile einzusetzen, wobei sich diese Mehrwegeventile dadurch unterscheiden, daß bei dem einen Mehrwegeventil die erste Druckmittelkammer und bei dem zweiten Mehrwegeventil die dritte Druckmittelkammer eine ständige Verbindung zur Eingangskammer des zugeordneten Vorsteuerventils haben muß.
Es ist also erforderlich, für jeden Einsatzzweck ein separates vorgesteuertes Mehrwegeventil vorzusehen.

Es ist ferner bekannt (EP-A-O-204 666), ein vorgesteuertes Mehrwegeventil mit zwei Druckmittelkammern und entsprechenden Druckmittelanschlüssen A, B auszugestalten, mit einer Ventileinrichtung 1, über welche die zwei Druckmittelkammern miteinander verbindbar sind, mit einer Steuerkammer 9 und einem Steuerkolben 4, der in der Öffnungsstellung die Steuerkammer 9 mit dem Auslaß verbindet (A oder B), und mit einem ersten Rückschlagventil 5b zwischen der ersten Druckmittelkammer und der Steuerkammer und einem zweiten Rückschlagventil 6b zwischen der zweiten Druckmittelkammer und der Steuerkammer derart, daß bei Einsteuerung von Druckmittel in der ersten Druckmittelkammer die zweite Druckmittelkammer gegen die Steuerkammer abgesperrt ist und bei Einsteuerung von Druckmittel in der zweiten Druckmittelkammer die erste Druckmittelkammer gegen die Steuerkammer abgesperrt ist.

Die FR-A-2 495 269 zeigt ein Mehrwegeventil nach Oberbegriff von Anspruch 1, wobei ein Rückschlagventil zwischen der Eingangskammer des Vorsteuerventils und der ersten Druckmittelkammer angeordnet ist. Dieses Mehrwegeventil ist nur als Belüftungsventil einsetzbar.

Der Erfindung liegt die Aufgabe zugrunde, ein Mehrwegeventil der eingangs erwähnten Art zu schaffen, das sowohl als Belüftungsventil als auch als Entlüftungsventil einsetzbar ist.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, dab es zur Funktionsveränderung lediglich erforderlich ist, eine von einer Druckmittelquelle kommende Leitung entweder an den mit der ersten Druckmittelkammer verbundenen ersten Druckmittelanschluß oder an den mit der dritten Druckmittelkammer verbundenen dritten Druckmittelanschluß anzuschließen und den jeweils anderen Druckmittelanschluß als Entlüftungsanschluß oder auch als Rücklaufanschluß zu benutzen.

Anhand der Zeichnung wird nachfolgend ein Ausführungsbeispiel der Erfindung näher erläutert.

Es zeigen:
**Fig.1** ein sowohl als Belüftungs- als auch als Entlüftungsventil ausgebildetes vorgesteuertes 3/2-Wegeventil und
**Fig.2** die Anordnung von zwei Rückschlagventilen im 3/2-Wegeventil nach Fig.1, wobei die Rückschlagventile zwischen der Eingangskammer eines Vorsteuerventils und zwei voneinander getrennt angeordneten Druckmittelkammern des Mehrwegeventils angeordnet sind.

In einem ersten Ventilgehäuse (27) sind in einer abgestuften Gehäusebohrung vier mit je einem äußeren und je einem inneren Dichtring versehene Dichtungseinsätze (17, 19, 22, 24) angeordnet. Die inneren Dichtringe bilden mit einem koaxial zu den Dichtungseinsätzen (17, 19, 22, 24) angeordneten Ventilschieber (28, 37, 39), welcher in Richtung der Längsachse der Dichtungseinsätze, (17, 19, 22, 24) relativ zu diesem verschiebbar angeordnet ist ein Schieberventil (17, 19, 22, 24, 28, 37, 39).

Der Ventilschieber (28, 37, 39) besteht aus einem mit einer Einschnürung (37) versehenen zylindrischen Teil, wobei die an die Einschnürung (37) anschließenden Abschnitte (28) und (39) einen Außendurchmesser aufweisen, der dem Innendurchmesser der inneren Dichtringe der Dichtungseinsätze (17, 19, 22, 24) entspricht.

Der zweite Dichtungseinsatz (19) bildet mit dem Teil (39) des Ventilschiebers ein erstes Ventil (39, 19) und der dritte Dichtungseinsatz (22) bildet mit dem Teil (28) des Ventilschiebers ein zweites Ventil (28, 22).
Von dem ersten Dichtungseinsatz (17) und dem zweiten Dichtungseinsatz (19) wird eine erste Druckmittelkammer (18) begrenzt, die mit einem ersten Druckmittelanschluß (38) verbunden ist. Eine mit einem zweiten Druckmittelanschluß (21) verbundene zweite Druckmittelkammer (20) wird von dem zweiten Dichtungseinsatz (19) und dem dritten Dichtungseinsatz (22) begrenzt. Der dritte Dichtungseinsatz (22) und der vierte Dichtungseinsatz (24) begrenzen eine dritte Druckmittelkammer (23), die mit einem dritten Druckmittelanschluß (35) in Verbindung steht.

Der Ventilschieber (28, 37, 39) wird von einer sich am Boden des ersten Ventilgehäuses (27) abstützenden, als Rückstellkraft dienenden Feder (26) unter Zwischenschaltung eines Federtellers (25) in Richtung auf einen das erste Ventilgehäuse (27) verschließenden Deckel (45) zu beaufschlagt. An dem Ende des Ventilschiebers (28, 37, 39), welches dem von der Feder (26) beaufschlagten Ende abgewandt ist, ist am Ventilschieber (28, 37, 39) ein Steuerkolben (40) angeordnet, der einen in einer Umfangsnut gelagerten Dichtring (41) trägt. Der Dichtring (41) liegt dichtend an der Wand eines sich von der ersten Druckmittelkammer (18) weg erstreckenden zylindrischen Fortsatzes des ersten Dichtungseinsatzes (17) an.

Von dem Steuerkolben (40) und dem Deckel (45) des ersten Ventilgehäuses (27) wird eine Steuerkammer (42) begrenzt, die über einen im Deckel (45) vorgesehenen Kanal (46) und einen an diesen anschließenden weiteren Kanal (47) mit einer Ausgangskammer (48) eines als Vorsteuerventil dienenden zusätzlichen schaltbaren Ventils in Verbindung steht.

An den Deckel (45) des ersten Ventilgehäuses (27) schließt ein zweites Ventilgehäuse (9) an, welches das als Elektromagnetventil ausgebildete Vorsteuerventil beinhaltet. Das Vorsteuerventil setzt sich aus einem ersten Ventilsitz (8) und einem ersten Ventilkörper (6), die ein Einlaßventil (8, 6) bilden und einem zweiten Ventilsitz (1) sowie einem zweiten Ventilkörper (2), die ein Auslaßventil (1, 2) bilden, zusammen. Der erste Ventilkörper (6) und der zweite Ventilkörper (2) sind an den einander abgewandten Stirnseiten eines Ankers (3) befestigt, der in einem in einer Spule (4) angeordneten Ankerführungsrohr in Richtung der Längsachse des Ankerführungsrohres verschiebbar angeordnet ist. Der Anker (3) wird von einer Feder (7) in Schließrichtung des Einlaßventils (8, 6) des Vorsteuerventils belastet.

An den im Deckel (45) des ersten Ventilgehäuses (27) vorgesehenen, die Steuerkammer (42) mit der Ausgangskammer (48) verbindenden Kanal (46) schließt der im Gehäuse (9) des Vorsteuerventils angeordnete, in die Ausgangskammer (48) einmündende Kanal (47) an. Die Spule (4) ist mit einem elektrischen Anschluß (5) versehen.

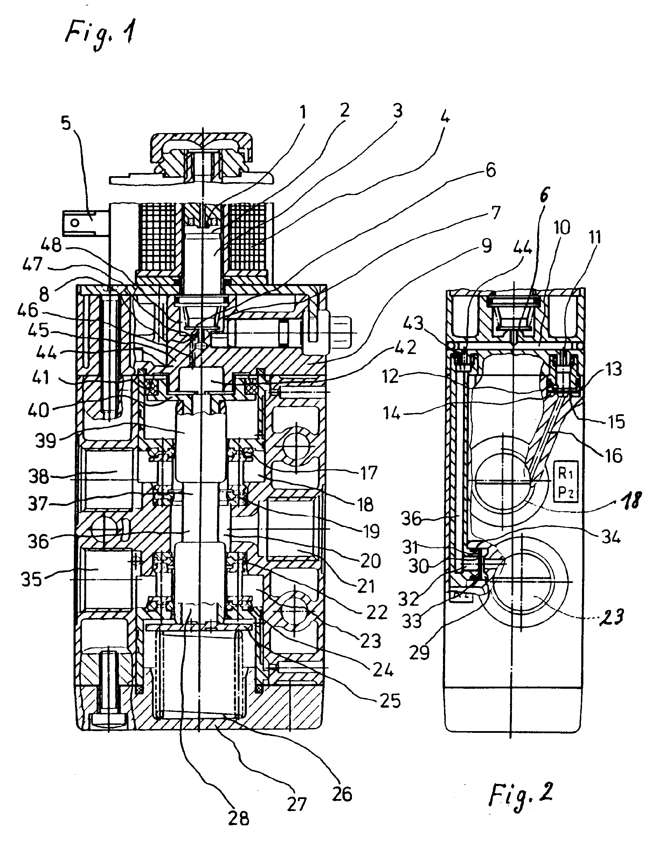

Wie in Fig.2 dargestellt, ist zwischen dem Gehäuse (9) des Vorsteuerventils und dem Deckel (45) des Gehäuses (27) des Mehrwegeventils eine Eingangskammer (10) für das Vorsteuerventil vorgesehen. Die Eingangskammer (10) kann aber auch direkt im Gehäuse des Mehrwegeventils oder im Gehäuse des Vorsteuerventils angeordnet sein.

Zwischen der ersten Druckmittelkammer (18) des Mehrwegeventils und der Eingangskammer (10) des Vorsteuerventils ist ein erstes Rückschlagventil angeordnet, welches in Richtung auf die Eingangskammer (10) zu in die Offenstellung und in Richtung auf die erste Druckmittelkammer (18) zu in die Schließstellung bringbar ist. Das erste Rückschlagventil besteht aus einem im Gehäuse (27) des Mehrwegeventils angeordneten Ventilsitz (15) und einem fliegend gelagerten Ventilkörper (13). Der Ventilkörper (13) unterteilt eine Ventilkammer in eine erste Teilkammer (14) und eine zweite Teilkammer (12). Die erste Teilkammer (14) ist über einen als Druckmittelleitung dienenden, im ersten Ventilgehäuse (27) angeordneten Kanal (16) mit der ersten Druckmittelkammer (18) verbindbar. Die zweite Teilkammer (12) steht über einen ebenfalls als Druckmittelleitung dienenden, im ersten Ventilgehäuse (27) angeordneten Kanal (11) mit der Eingangskammer (10) des Vorsteuerventils in Verbindung.

Ein zweites Rückschlagventil ist zwischen der dritten Druckmittelkammer (23) des Mehrwegeventils und der Eingangskammer (10) des Vorsteuerventils vorgesehen. Das zweite Rückschlagventil ist in Richtung auf die Eingangskammer (10) zu in die Offenstellung und in Richtung auf die dritte Druckmittelkammer (23) zu in die Schließstellung bringbar.
Es setzt sich aus einem im Bereich der dritten Druckmittelkammer (23) angeordneten Ventilsitz (30) und einem in einer Ventilkammer fliegend gelagerten Ventilkörper (31) zusammen. Der Ventilkörper (31) unterteilt die Ventilkammer in eine erste Teilkammer (29) und eine zweite Teilkammer (34). Die erste Teilkammer (29) ist mit der dritten Druckmittelkammer (23) verbindbar. Die zweite Teilkammer (34) steht über einen Anschluß (32) und einen als Druckmittelleitung dienenden Kanal (36) im ersten Ventilgehäuse (27), eine Kammer (43) und einen an diese Kammer (43) anschließenden Kanal (44) im Deckel (45) des ersten Ventilgehäuses (27) mit der Eingangskammer (10) des Vorsteuerventils in Verbindung.

Die Funktion des im vorstehenden beschriebenen vorgesteuerten Mehrwegeventils wird nachfolgend näher erläutert.

Es wird angenommen, daß der erste Druckmittelanschluß (38) mit einer Druckmittelquelle und der zweite Druckmittelanschluß (21) mit einem Verbraucher verbunden ist. Der dritte Druckmittelanschluß (35) dient in diesem Fall als ein zur Atmosphäre hin führender Druckmittelauslaß.

In der gezeigten Stellung befindet sich das als Einlaßventil dienende erste Ventil (19, 39) des Mehrwegeventils in der Offenstellung und das als Auslaßventil dienende zweite Ventil (22, 28) des Mehrwegeventils befindet sich in der Schließstellung.

Die erste Druckmittelkammer (18) ist über das geöffnete Einlaßventil (19, 39) mit der zweiten Druckmittelkammer (20) verbunden. Die zweite Druckmittelkammer (20) ist gegen die dritte Druckmittelkammer (23) abgesperrt.

Über den Kanal (16) und das vom Druckmittel in der ersten Druckmittelkammer (18) in Richtung auf die Eingangskammer (10) zu in die Offenstellung gebrachte erste Rückschlagventil (15, 13, 12) steht als Steuerdruck dienendes Druckmittel aus der ersten Druckmittelkammer (18) in der Eingangskammer (10) des Vorsteuerventils an. Von der Eingangskammer (10) des Vorsteuerventils gelangt Druckmittel über den Kanal (44), die Kammer (43), den Kanal (36) und den Anschluß (32) in die zweite Teilkammer (34) des zweiten Rückschlagventils (30, 31) und beaufschlagt den Ventilkörper (31) in Schließrichtung des zweiten Rückschlagventils (30, 31). Die Eingangskammer (10) des Vorsteuerventils und die dritte Druckmittelkammer (23) sind jetzt gegeneinander abgesperrt.

Die Spule (4) des als Elektromagnetventil ausgebildeten Vorsteuerventils ist nicht erregt. Das Einlaßventils (8, 6) des Vorsteuerventils befindet sich in der Schließstellung und das Auslaßventil (2, 1) des Vorsteuerventils ist geöffnet.

Wird an die Spule (4) eine Spannung angelegt, so bewegt sich der Anker (3) gegen die Kraft der Feder (7) in Richtung auf den Auslaßventilsitz (1) zu. Das Auslaßventil (1, 2) gelangt in die Schließstellung und das Einlaßventil (8, 6) gelangt in die Offenstellung. Über das nun geöffnete Einlaßventil (8, 6) des Vorsteuerventils (8, 6, 1, 2, 7) gelangt Druckmittel aus der Eingangskammer (10) in die Ausgangskammer (48) und von dieser durch die Kanäle (47) und (46) in die Steuerkammer (42) des Mehrwegeventils. Unter der Einwirkung des sich in der Steuerkammer (42) aufbauenden Druckes wird der Steuerkolben (40) und somit auch der mit diesem verbundene Ventilschieber (28, 37, 39) gegen die Kraft der Feder (26) nach unten, in Richtung vom Deckel (45) des Mehrwegeventils weg bewegt.

Das Einlaßventil (19, 39) des Mehrwegeventils gelangt in die Schließstellung und das Auslaßventil (22, 28) des Mehrwegeventils wird geöffnet.
Die erste Druckmittelkammer (18) und die zweite Druckmittelkammer (20) sind gegeneinander abgesperrt, so daß die Verbindung von der Druckmittelquelle zum Verbraucher unterbrochen ist.
Da die zweite Druckmittelkammer (20) jetzt mit der dritten Druckmittelkammer (23) verbunden ist, wird der Verbraucher über die zweite Druckmittelkammer (20), das geöffnete Auslaßventil (24, 28), die dritte Druckmittelkammer (23) und den Druckmittelanschluß (35) zur Atmosphäre hin entlüftet.
Wird das vorgesteuerte Mehrwegeventil in einer hydraulisch betriebenen Anlage oder Einrichtung eingesetzt so ist der mit der dritten Druckmittelkammer (23) in Verbindung stehenden Druckmittelanschluß (35) mit einem Rücklauf verbunden.

Soll in den Verbraucher wieder Druckmittel eingesteuert werden, so wird die Spannung von der Spule (4) weggenommen. Mittels der Kraft der Feder (7) gelangt das Einlaßventil (8, 6) des Vorsteuerventils wieder in die Schließstellung und das Auslaßventil (1, 2) des Vorsteuerventils gelangt in die Offenstellung. Die Steuerkammer (42) des Mehrwegeventils wird über die Kanäle (46, 47), die Ausgangskammer (48) und das Auslaßventil (1, 2) des Vorsteuerventils zur Atmosphäre hin entlüftet.

Durch die Kraft der Feder (26) wird der Ventilschieber (28, 37, 39) und somit auch der mit diesem verbundene Steuerkolben (40) in Richtung auf den Deckel (45) des Mehrwegeventils zu verschoben. Das als Auslaßventil dienende zweite Ventil (22, 28) gelangt in die Schließstellung und das als Einlaßventil dienende erste Ventil (19, 39) des Mehrwegeventils gelangt in die Offenstellung.

Soll das vorgesteuerte Mehrwegeventil als Belüftungsventil eingesetzt werden, so wird der dritte Druckmittelanschluß (35) mit der Druckmittelquelle verbunden. Der erste Druckmittelanschluß (38) führt dann zur Atmosphäre hin. In der Ruhestellung befindet sich das Mehrwegeventil in der in der Zeichnung dargestellten Schaltstellung.
Das in diesem Fall als Auslaßventil dienende erste Ventil (19, 39) des Mehrwegeventils befindet sich in der Offenstellung so daß der Verbraucher über die dritte Druckmittelkammer (20) das geöffnete Auslaßventil (17, 39), die erste Druckmittelkammer (18) sowie den ersten Druckmittelanschluß (38) mit der Atmosphäre verbunden und somit drucklos ist. Das als Einlaßventil dienende zweite Ventil (22, 28) befindet sich in der Schließstellung, so daß die mit dem dritten Druckmittelanschluß (35) verbundene dritte Druckmittelkammer (23) gegen die mit dem Verbraucher über den zweiten Druckmittelanschluß (21) in Verbindung stehende zweite Druckmittelkammer (20) abgesperrt ist und das in der dritten Druckmittelkammer (23) anstehende Druckmittel nicht zum Verbraucher gelangen kann.

Über das vom Druckmittel in der dritten Druckmittelkammer (23) geöffnete zweite Rückschlagventil (30, 31), den Anschluß (32), den Kanal (36), die Kammer (43) und den Kanal (44) steht Druckmittel in der Eingangskammer (10) des Vorsteuerventils (6, 8, 1, 2, 7) an. Das erste Rückschlagventil (12, 13, 15) wird vom Druckmittel in der Eingangskammer (10) in Schließrichtung beaufschlagt, so daß die Eingangskammer (10) gegen die erste Druckmittelkammer (18) abgesperrt ist.

Wird an die Spule (4) des Vorsteuerventils (8, 6, 1, 2, 7) eine Spannung angelegt, so gelangt das Einlaßventil (8, 6) des Vorsteuerventils in die Offenstellung und das Auslaßventil (1, 2) des Vorsteuerventils gelangt in die Schließstellung. Die Steuerkammer (42) des Mehrwegeventils wird belüftet. Der sich in der Steuerkammer (42) aufbauende Druck verschiebt den Steuerkolben (40) und den mit diesem verbundenen Ventilschieber (28, 37, 39) gegen die Kraft der Feder (26) in Richtung vom Deckel (45) des Mehrwegeventils weg. Das jetzt als Auslaßventil dienende erste Ventil (19, 39) gelangt in die Schließstellung und das jetzt als Einlaßventil dienende zweite Ventil (22, 28) gelangt in die Offenstellung.
Die mit dem ersten Druckmittelanschluß (38) verbundene erste Druckmittelkammer (18) ist gegen die mit dem zweiten Druckmittelanschluß (21) verbundene zweite Druckmittelkammer (20) abgesperrt, so daß keine Verbindung mehr zwischen dem Verbraucher und der Atmosphäre besteht. Die mit dem dritten Druckmittelanschluß (35) verbundene dritte Druckmittelkammer (23) ist über das jetzt geöffnete zweite Ventil (22, 28) mit der zweiten Druckmittelkammer (20) verbunden. Von der dritten Druckmittelkammer (23) strömt Druckmittel durch das geöffnete zweite Ventil (22, 28), die zweite Druckmittelkammer (20) und den Druckmittelanschluß (21) zum Verbraucher.

Wird die Spannung von der Spule (4) wieder weggenommen, gelangt das Einlaßventil (8, 6) des Vorsteuerventils in die Schließstellung und das Auslaßventil (1, 2) des Vorsteuerventils gelangt in die Offenstellung. Die Eingangskammer (10) des Vorsteuerventils ist jetzt gegen die Ausgangskammer (48) des Vorsteuerventils abgesperrt. Über die Kanäle (46, 47) und das sich in der Offenstellung befindliche Auslaßventil (1, 2) des Vorsteuerventils wird die Steuerkammer (42) des Mehrwegeventils entlüftet.

Unter Einwirkung der Kraft der Feder (26) des Mehrwegeventils wird der Ventilschieber (28, 37, 39) und somit auch der Steuerkolben (40) wieder in seine Ausgangsstellung verschoben. Dabei gelangt das als Einlaßventil dienende zweite Ventil (22, 28) wieder in die Schließstellung und das als Auslaßventil dienende erste Ventil (19, 39) gelangt in die Offenstellung. Der Verbraucher wird über den zweiten Druckmittelanschluß (21), die zweite Druckmittelkammer (20), das geöffnete Auslaßventil (19, 39), die erste Druckmittelkammer (18) und den mit dieser verbundenen ersten Druckmittelanschluß (38) zur Atmosphäre hin entlüftet.

Das Mehrwegeventil kann, wie in diesem Ausführungsbeispiel dargestellt, als Schieberventil ausgebildet sein, es kann aber auch als Doppelsitzventil ausgebildet sein.
Die Eingangskammer (10) des Vorsteuerventils (6, 8, 1, 2, 7) kann über das zweite Rückschlagventil (30, 31) sowohl mit der dritten Druckmittelkammer (23) als auch mit der ersten Druckmittelkammer (18) verbunden werden bzw. die Eingangskammer (10) gegen die dritte Druckmittelkammer (23) oder die erste Druckmittelkammer (18) abgesperrt werden. Desgleichen kann über das erste Rückschlagventil (13, 15) sowohl die Eingangskammer (10) des Vorsteuerventils mit der ersten Druckmittelkammer (18) als auch mit der dritten Druckmittelkammer (23) verbunden sein bzw. die Eingangskammer (10) gegen die erste Druckmittelkammer (18) oder die dritte Druckmittelkammer (23) abgesperrt werden. Die Rückschlagventile können als einknüpfbare Kunststoffteile ausgebildet sein.

## Patentansprüche

1. Vorgesteuertes Mehrwegeventil mit :
a) einem mit einer ersten Druckmittelkammer (18) verbundenen ersten Druckmittelangschluß (38);
b) einem mit einer zweiten Druckmittelkammer (20) verbundenen zweiten Druckmittelanschluß (21);
c) einem mit einer dritten Druckmittelkammer (23) verbundenen dritten Druckmittelanschluß (35);
d) einer Ventileinrichtung (19, 39, 22, 28), über welche die zweite Druckmittelkammer (20) wahlweise mit der ersten Druckmittelkammer (18) oder mit der dritten Druckmittelkammer (23) verbindbar ist;
e) einem zwischen einer Eingangskammer (10) des zusätzlichen Ventils (8, 6, 1, 2, 7) und der ersten Druckmittelkammer (18) angeordneten ersten Rückschlagventil (13, 15), welches bei Einsteuerung von Druckmittel in die erste Druckmittelkammer (18) die erste Druckmittelkammer (18) mit der Eingangskammer (10) verbindet; wobei
f) zur Betätigung der Ventileinrichtung (19, 39, 22, 28) ein Steuerkolben (40) dient, der von einem Steuerdruckmittel in einer vom Steuerkolben (40) begrenzten Steuerkammer (42) gegen eine Rückstellkraft bewegbar ist;
g) die Steuerkammer (42) über ein zusätzliches schaltbares Ventil (6, 8, 1, 2, 7) be- und entlüftbar ist;
gekennzeichnet durch die folgenden Merkmale:
h) zwischen der Eingangskammer (10) des zusätzlichen Ventils (8, 6, 1, 2, 7) und der dritten Druckmittelkammer (23) ist ein zweites Rückschlagventil (30, 31) angeordnet, welches bei Einsteuerung von Druckmittel in die dritte Druckmittelkammer (23) die dritte Druckmittelkammer (23) mit der Eingangskammer (10) verbindet;
i) das erste Rückschlagventil (13, 15) und das zweite Rückschlagventil (30, 31) sind so zueinander und so zu der Eingangskammer (10) angeordnet, daß bei Einsteuerung von Druckmittel in die erste Druckmittelkammer (18) die Eingangskammer (10) gegen die dritte Druckmittelkammer (23) abgesperrt wird und bei Einsteuerung von Druckmittel in die dritte Druckmittelkammer (23) die Eingangskammer (10) gegen die erste Druckmittelkammer (18) abgesperrt wird.

2. Vorgesteuertes Mehrwegeventil nach Anspruch 1, dadurch gekennzeichnet, daß das Mehrwegeventil als Schieberventil (19, 39, 22, 28) ausgebildet ist.

3. Vorgesteuertes Mehrwegeventil nach Anspruch 1, dadurch gekennzeichnet, daß das zusätzliche schaltbare Ventil als Elektromagnetventil ausgebildet ist.

4. Vorgesteuertes Mehrwegeventil nach wenigstens einem der vorhergehenden Ansprüche, dadurch gekennzeichnet, daß die Rückschlagventile (13, 15) und (30, 31) als einknüpfbare Kunststoffteile ausgebildet sind.

## Claims

1. A pilot-operated multi-wave valve with:
a) a first pressurised medium connection (38) connected to a first pressurised medium chamber (18);
b) a second pressurised medium connection (21) connected to a second pressurised medium chamber (20);
c) a third pressurised medium connection (35) connected to a third pressurised medium chamber (23);
d) a valve means (19, 39, 22, 28) via which the second pressurised medium chamber (20) can be optionally connected to the first pressurised medium chamber (18) or to the third pressurised medium chamber (23);
e) a first non-return valve (13, 15) disposed between an inlet chamber (20) of the additional valve (8, 6, 1, 2, 7) and the first pressurised medium chamber (18) and which, when pressurised medium is introduced under control into the first pressurised medium chamber (18), connects the first pressurised medium chamber (18) to the inlet chamber (10);
whereby
f) for actuating the valve means (19, 39, 22, 20) a control piston (40) is used, which is adapted to be moved against a restoring force by a pressurised control medium in a control chamber (42) defined by the control piston (40);
g) the control chamber (42) can be aerated and de-aerated via an additional switchable valve (6, 8, 1, 2, 7);
characterised by the following features:
h) between the inlet chamber (10) of the additional valve (8, 6, 1, 2, 7) and the third pressurised medium chamber (23) there is a second non-return valve (30, 31) which connects the third pressurised medium chamber (23) to the inlet chamber (10) when pressurised medium is introduced under control into the third pressurised medium chamber (23);
i) the first non-return valve (13, 15) and the second non-return valve (30, 31) are so disposed in relation to each other and in relation to the inlet chamber (10) that when pressurised medium is introduced under control into the first pressurised medium chamber (18) the inlet chamber (10) is shut off from the third pressurised medium chamber (23) and, when pressurised medium is introduced under control into the third pressurised medium chamber (23), the inlet chamber (10) is shut off from the first pressurised medium chamber (18).

2. A pilot-operated multi-wave valve according to Claim 1, characterised in that the multi-wave valve is constructed as a slide valve (19, 39, 22, 28).

3. A pilot-operated multi-wave valve according to Claim 1, characterised in that the addititional switchable valve is constructed as an electromagnetic valve.

4. A pilot-operated multi-wave valve according to at least one of the preceding Claims, characterised in that the non-return valves (13, 15) and (30, 31) are constructed as synthetic plastic parts which can be tied in.

## Revendications

1. Soupape à plusieurs voies, précommandée, avec :
a) un premier raccord de fluide sous pression (38) relié à une première chambre de fluide sous pression (18),
b) un deuxième raccord de fluide sous pression (21) relié à une deuxième chambre de fluide sous pression (20),
c) un troisième raccord de fluide sous pression (35) relié à une troisième chambre de fluide sous pression (23),
d) un dispositif de soupape (19, 39, 22, 28) par lequel on peut au choix relier la deuxième chambre de fluide sous pression (20) à la première chambre de fluide sous pression (18) ou à la troisième chambre de fluide sous pression (23),
e) un premier clapet de non retour (13, 15) disposé entre une chambre d'entrée (10) de la soupape additionnelle (8, 6, 1, 2, 7) et la première chambre de fluide sous pression (18), clapet qui relie lors de l'entrée du fluide sous pression dans la première chambre de fluide sous pression (18) la première chambre de fluide sous pression (18) à la chambre d'entrée (10),
soupape dans laquelle :
f) pour actionner le dispositif de soupape (19, 39, 22, 28) on utilise un piston de commande (40), qui peut être déplacé par un fluide sous pression de commande dans une chambre de commande (42) limitée par le piston de commande (40) à l'encontre d'une force de rappel,
g) la chambre de commande (42) peut être aérée et mise à l'atmosphère par une soupape commutable additionnelle (6, 8, 1, 2, 7),
soupape caractérisée par les particularités suivantes :
h) entre la chambre d'entrée (10) de la soupape additionnelle (8, 6, 1, 2, 7) et la troisième chambre de fluide sous pression (23) est disposé un deuxième clapet de non retour (30, 31), qui lors de l'entrée du fluide sous pression dans la troisième chambre de fluide sous pression (23) relié la troisième chambre de fluide sous pression (23) à la chambre d'entrée (10),
i) le premier clapet de non retour (13, 15) et le deuxième clapet de non retour (30, 31) sont disposés l'un par rapport l'autre et par rapport à la chambre d'entrée (10), de telle sorte que lors de l'entrée du fluide sous pression dans la première chambre de fluide sous pression (18), la chambre d'entrée (10) est obturée par rapport à la troisième chambre de fluide sous pression (23) et lors de l'entrée du fluide sous pression dans la troisième chambre de fluide sous pression (23), la chambre d'entrée (10) est obturée par rapport à la première chambre de fluide sous pression (18).

2. Soupape à plusieurs voies précommandée selon la revendication 1, caractérisée en ce que la soupape à plusieurs voies est constituée comme un tiroir (19, 39, 22, 28).

3. Soupape à plusieurs voies précommandée selon la revendication 1, caractérisée en ce que la soupape additionnelle pouvant être mise en circuit est constituée comme une électrovanne.

4. Soupape à plusieurs voies précommandée selon au moins l'une des revendications précédentes, caractérisée en ce que les clapets de non retour (13, 15) et (30, 31) sont constitués comme des pièces en matière plastique que l'on peut combiner.
